(19) Europäisches Patentamt
European Patent Office
Office européen des brevets

(11) EP 3 587 370 A1

(12) # EUROPEAN PATENT APPLICATION
published in accordance with Art. 153(4) EPC

(43) Date of publication:
**01.01.2020 Bulletin 2020/01**

(21) Application number: **18756885.2**

(22) Date of filing: **24.01.2018**

(51) Int Cl.:
***C03C 17/30*** *(2006.01)* ***B32B 17/10*** *(2006.01)*
***C09D 7/40*** *(2018.01)* ***C09D 183/08*** *(2006.01)*
***C09D 201/00*** *(2006.01)*

(86) International application number:
**PCT/JP2018/002078**

(87) International publication number:
**WO 2018/155048 (30.08.2018 Gazette 2018/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **21.02.2017 JP 2017030095**

(71) Applicant: **Central Glass Company, Limited**
**Yamaguchi 755-0001 (JP)**

(72) Inventors:
- **NAKAI Nobuyuki**
  **Matsusaka-shi**
  **Mie 515-0001 (JP)**
- **OBARA Yoshihiko**
  **Matsusaka-shi**
  **Mie 515-0001 (JP)**

(74) Representative: **Cabinet Beau de Loménie**
**158, rue de l'Université**
**75340 Paris Cedex 07 (FR)**

(54) **METHOD FOR MANUFACTURING COLOR COATED PLATE GLASS**

(57) The present invention provides a method of producing a colored film-attached glass sheet having good hardness and good coloration and capable of favorably maintaining the good coloration for a long time. The method of producing a colored film-attached glass sheet including a glass sheet and a colored film formed on at least one surface of the glass sheet includes: a step of obtaining a colored film-forming coating solution by mixing the following components: (a) a reaction product obtained by reacting an amino group-containing silane compound with at least one boron compound selected from the group consisting of $H_3BO_3$ and $B_2O_3$; (b) a metal alkoxide and/or a metal alkoxide condensate; (c) a synthetic resin; (d) a triazine-based UV absorber; (e) a solvent substantially consisting of a non-aqueous solvent having an SP value of 8 to 11.5 $(cal/cm^3)^{1/2}$; and (f) a pigment, wherein the colored film-forming coating solution contains the UV absorber in an amount of 5 to 12% by mass relative to the total solids content and the pigment in an amount equal to 0.02 to 0.50 times the amount of the UV absorber by mass ratio.

EP 3 587 370 A1

## Description

TECHNICAL FIELD

The present invention relates to a technique to provide a colored glass sheet by forming a film on a surface of a glass sheet.

BACKGROUND ART

The hardness of a film formed by coating on a surface of a glass sheet has been improved, and glass having such a film formed thereon has been used as UV absorbing window glass for automobiles (e.g., Non-Patent Literature 1). Patent Literature 1 discloses a UV absorbing film having high hardness. The film has an Si-O-B bond and contains a UV absorber dispersed therein.

CITATION LIST

- Patent Literature

Patent Literature 1: JP-A 2015-34281

- Non-Patent Literature

Non-Patent Literature 1: "High performance UV cut tempered automotive glass", NEW GLASS, Vol. 27, No. 104, pp. 70 to 74, 2012

SUMMARY OF INVENTION

- Technical Problem

The film disclosed in Patent Literature 1 may contain a pigment. Thus, according to the literature, it may be possible to provide a colored film having high hardness. Yet, achieving the practical use of a colored film requires not only hardness of the film but also good coloration of the film, and the good coloration needs to be maintained for a long time.

The present invention aims to provide a method of producing a colored film-attached glass sheet having good hardness and good coloration and capable of favorably maintaining the good coloration for a long time.

- Solution to Problem

In providing a colored film having good hardness and good coloration and capable of maintaining the good coloration for a long time, the amount of a UV absorber in the colored film plays an important role because ultraviolet light causes discoloration of a pigment serving as a coloring component of the colored film, making it difficult for the colored film to maintain good coloration for a long time. When the colored film contains a large amount of a UV absorber in order to reduce the discoloration, the hardness of the colored film tends to be low and the components of the film except for the pigment will render yellow, making it difficult to obtain a colored film having good coloration. Thus, the type and amount of the UV absorber are important factors in achieving the object of the present invention.

The present invention was accomplished as a result of intensive studies in view of the above. Specifically, the method of producing a colored film-attached glass sheet of the present invention is a method of producing a colored film-attached glass sheet including a glass sheet and a colored film formed on at least one surface of the glass sheet, the method including:

a step of obtaining a colored film-forming coating solution by mixing the following components:

(a) a reaction product obtained by reacting an amino group-containing silane compound represented by $R^1_{4-n}Si(OR^2)_n$ [1] wherein $R^1$ represents an organic group containing an amino group, $R^2$ represents a methyl, ethyl, or propyl group, and n represents an integer selected from 1 to 3, with at least one boron compound selected from the group consisting of $H_3BO_3$ and $B_2O_3$;
(b) a metal alkoxide and/or a metal alkoxide condensate;
(c) a synthetic resin;
(d) a triazine-based UV absorber having an SP value of 10 to 13.5 $(cal/cm^3)^{1/2}$;

(e) a solvent substantially consisting of a non-aqueous solvent having an SP value of 8 to 11.5 $(cal/cm^3)^{1/2}$; and
(f) a pigment;

a coating step of coating a surface of the glass sheet with the film-forming coating solution to form a coating thereon; and
a curing step of heating the glass sheet after the coating step to cure the coating to form the film,
wherein the coating solution contains the UV absorber in an amount of 5 to 12% by mass relative to the total solids content and the pigment in an amount equal to 0.02 to 0.50 times the amount of the UV absorber by weight ratio, and the colored film has a thickness of 1.5 to 8 μm.

In the colored film-forming coating solution, a mixture of the components (a) to (c) forms a matrix of the colored film. The colored film contains the matrix and the components (d) and (f). On the premise that the matrix and the film each have a thickness of 1.5 to 8 μm, the amount of the UV absorber is set to 5 to 12% by mass, preferably 7 to 10% by mass, relative to the total solids content, and the amount of the pigment is set to 0.02 to 0.50, preferably 0.03 to 0.36 times the amount of the UV absorber by mass ratio. In this manner, it is possible to provide a film having good hardness and good coloration and capable of favorably maintaining the good coloration for a long time.

- Advantageous Effects of Invention

The colored film-attached glass sheet obtained by the production method of the present invention has good hardness and good coloration and can favorably maintain the coloration for a long time. The present invention can achieve the practical use of the colored film-attached glass sheet.

DESCRIPTION OF EMBODIMENTS

The method of producing a colored film-attached glass sheet of the present invention is a method of producing a colored film-attached glass sheet including a glass sheet and a colored film formed on at least one surface of the glass sheet, the method including:

a step of obtaining a colored film-forming coating solution by mixing the following components:

(a) a reaction product obtained by reacting an amino group-containing silane compound represented by $R^1_{4-n}Si(OR^2)_n$ [1] wherein $R^1$ represents an organic group containing an amino group, $R^2$ represents a methyl, ethyl, or propyl group, and n represents an integer selected from 1 to 3, with at least one boron compound selected from the group consisting of $H_3BO_3$ and $B_2O_3$;
(b) a metal alkoxide and/or a metal alkoxide condensate;
(c) a synthetic resin;
(d) a triazine-based UV absorber having an SP value of 10 to 13.5 $(cal/cm^3)^{1/2}$;
(e) a solvent substantially consisting of a non-aqueous solvent having an SP value of 8 to 11.5 $(cal/cm^3)^{1/2}$; and
(f) a pigment;

a coating step of coating a surface of the glass sheet with the film-forming coating solution to form a coating thereon; and
a curing step of heating the glass sheet after the coating step to cure the coating to form the film,
wherein the colored film-forming coating solution contains the UV absorber in an amount of 5 to 12% by mass relative to the total solids content and the pigment in an amount equal to 0.02 to 0.50 times the amount of the UV absorber by mass ratio, and the colored film has a thickness of 1.5 to 8 μm.

The "total solids content" refers to the total amount of the components constituting the colored film. The total solids content can be determined by subtracting the amount of organic groups removed from the components by a reaction such as hydrolysis or polycondensation, from the sum of the components of the film-forming coating solution excluding a solvent. The viscosity of the coating solution varies depending on the total solids content in the film-forming coating solution. Thus, the total solids content can be set in view of the coating efficiency of the coating solution to be applied to the glass sheet, and may be, for example, 5% by mass to 40% by mass, preferably 10% by mass to 35% by mass.
The present invention is described in detail below.

[Colored film-forming coating solution]

1. Component (a)

An amino group-containing silane compound represented by

$$R^1_{4-n}Si(OR^2)_n \quad [1]$$

(in formula [1], $R^1$ represents an organic group containing an amino group, $R^2$ represents a methyl, ethyl, or propyl group, n represents an integer selected from 1 to 3) is mixed with
at least one boron compound selected from the group consisting of $H_3BO_3$ and $B_2O_3$. When mixed, these components undergo a reaction, and the mixture becomes a viscous colorless liquid in several to several tens of minutes and is then solidified. Presumably, this is because the boron compound acts as a crosslinking agent via an amino group in the amino group-containing silane compound and polymerizes these components, resulting in a viscous liquid which is then solidified. The amino group-containing silane compound is a liquid. Preferably, no water is used in the reaction of the amino group-containing silane compound with the boron compound.

In the amino group-containing silane compound, $R^1$ represents an organic group containing an amino group. Non-limiting examples include monoaminomethyl, diaminomethyl, triminomethyl, monoaminoethyl, diaminoethyl, triaminoethyl, tetraaminoethyl, monoaminopropyl, diaminopropyl, triaminopropyl, tetraaminopropyl, monoaminobutyl, diaminobutyl, triaminobutyl, and tetraaminobutyl, and other organic groups containing an alkyl or aryl group having a larger number of carbon atoms than the above groups. γ-Aminopropyl and aminoethylaminopropyl are particularly preferred, and γ-aminopropyl is the most preferred.

The $R^2$ represents a methyl, ethyl, or propyl group. Of these, methyl and ethyl groups are preferred. The n represents an integer selected from 1 to 3. Of these, n is preferably 2 or 3, particularly preferably 3. In other words, the amino group-containing silane compound is particularly preferably γ-aminopropyltriethoxysilane or N-β-(aminoethyl)-γ-aminopropyltrimethoxysilane. The boron compound is at least one boron compound selected from the group consisting of $H_3BO_3$ and $B_2O_3$. $H_3BO_3$ is particularly preferred.

As for the amount of the amino group-containing silane compound and the amount of the boron compound to be used in the reaction, in view of reaction rate, the amount of the boron compound is preferably 0.02 mol to 8 mol, more preferably 0.02 mol to 5 mol, still more preferably 0.2 mol to 5 mol, relative to 1 mol of the amino group-containing silane compound.

Mixing conditions (such as temperature, mixing time, and mixing method) of the amino group-containing silane compound and the boron compound can be suitably selected. At normal room temperature, the mixture becomes a viscous colorless liquid in several to several tens of minutes and is then solidified. The solidification time and the viscosity and rigidity of the resulting reaction product vary depending on the proportion of the boron compound. A viscous liquid is preferred than a solid because the viscous liquid can be readily used as a component stably dissolved in the coating solution. The reaction product is preferably obtained by reacting the amino group-containing silane compound with the boron compound, without hydrolysis by adding water.

The amount of the reaction product can be 40% by mass to 80% by mass relative to the total solids content. When the amount is less than 40% by mass, the resulting colored film may have low hardness. When the amount is more than 80% by mass, the resulting colored film may crack during a weather resistance test. In view of the above, the amount of the reaction product may be 50% by mass to 70% by mass relative to the total solids content.

(2) Component (b)

A metal alkoxide and/or a metal alkoxide condensate is added as the component (b) to the reaction product. Specifically, the component (b) is added during or after the reaction of the amino group-containing silane compound with the boron compound. Adding the component (b) can improve the hardness of the resulting colored film, and a liquid containing the component (b) is as viscous as a liquid not containing the component (b). Thus, the component (b) can be used as a component stably dissolved in the coating solution.

Non-limiting examples of the metal of the metal alkoxide as the component (b) include Si, Ta, Nb, Ti, Zr, Al, Ge, B, Na, Ga, Ce, V, Ta, P, and Sb. Si, Ti, and Zr are preferred, and the component (b) is preferably a liquid. Thus, Si and Ti are particularly preferred. Examples of the alkoxide (alkoxy group) of the metal alkoxide as the component (b) include methoxy, ethoxy, propoxy, butoxy, and other alkoxy groups having a larger number of carbon atoms than the above groups. Methoxy, ethoxy, propoxy, and butoxy groups are preferred, and methoxy and ethoxy groups are more preferred. The component (b) is particularly preferably tetramethoxysilane, tetraethoxysilane, or the like, for example.

Specific examples of the metal alkoxide as the component (b) include tetramethoxysilane, tetraethoxysilane, tetrapropoxysilane, tetrabutoxysilane, methyltrimethoxysilane, ethyltriethoxysilane, propyltripropoxysilane, butyltributoxysilane, tetramethoxysilane, tetraethoxytitanium, tetrapropoxytitanium, tetrabutoxytitanium, methyltrimethoxytitanium, ethyltriethoxytitanium, propyltripropoxytitanium, butyltributoxytitanium, tetramethoxyzirconium, tetraethoxyzirconium, tetrapropoxyzirconium, tetrabutoxyzirconium, methyltrimethoxyzirconium, ethyltriethoxyzirconium, propyltripropoxyzirconium, and butyltributoxyzirconium. Of these, tetraethoxysilane, tetramethoxysilane, ethyltriethoxysilane, and methyltrimethoxysilane are preferred.

The amount of the metal alkoxide as the component (b) is preferably 10 mol or less, more preferably 0.1 mol to 5 mol, relative to 1 mol of the amino group-containing silane compound. When the amount of the component (b) is less than 0.1 mol relative to 1 mol of the amino group-containing silane compound and 1 mol of the boron compound, the above described effects obtainable from addition of the component (b) may be difficult to obtain. When the amount of the component (b) is more than 5 mol, the resulting colored film may be clouded in white.

Examples of the metal alkoxide condensate as the component (b) include a metal alkoxide condensate represented by at least one formula selected from the group consisting of the following formulas (b1) and (b2):

[Chem. 1]

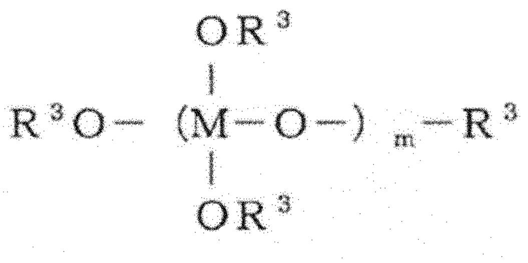

(b1)

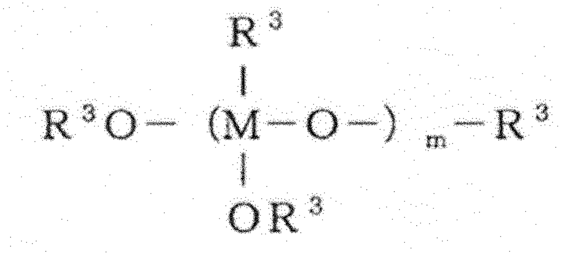

(b2)

wherein each $R^3$ represents an alkyl group and one or more of them may be hydrogen, each $R^3$ may be the same as or different from each other, m represents an integer selected from 2 to 20, M represents at least one metal selected from the group consisting of Si, Ti, and Zr.

The amount of the metal alkoxide condensate as the component (b) in terms of the mass of the metal alkoxide monomer is preferably 2 to 50 mol, more preferably 4 mol or more, relative to 11 mol of the amino group-containing silane compound. Specifically, when the amount of the component (b) is too large, the resulting film tends to have low hardness. When the amount is too small, the resulting film may have low hardness or poor chemical durability depending on use, due to the low metal element content. When the amount of the component (b) is too large, curing to obtain the colored film of the present invention tends to take long time.

Each $R^3$ in the metal alkoxide condensate as the component (b) represents an alkyl group and one or more of them may be hydrogen, each $R^3$ may be the same as or different from each other, and each $R^3$ is a methyl, ethyl, propyl, or butyl group, or an alkyl group having a larger number of carbon atoms then the above groups, preferably a methyl or ethyl group. Additionally, m in the metal alkoxide condensate as the component (b) represents an integer selected from 2 to 20, and m is preferably 3 to 10, most preferably 5. Further, M in the metal alkoxide condensate as the component (b) represents at least one metal selected from the group consisting of Si, Ti, and Zr. M is preferably Si or Ti, most preferably Si.

Examples of the metal alkoxide monomer unit constituting the metal alkoxide condensate as the component (b) include tetramethoxysilane, tetraethoxysilane, tetrapropoxysilane, tetrabutoxysilane, methyltrimethoxysilane, ethyltriethoxysilane, propyltripropoxysilane, butyltributoxysilane, tetramethoxysilane, tetraethoxytitanium, tetrapropoxytitanium, tetrabutoxytitanium, methyltrimethoxytitanium, ethyltriethoxytitanium, propyltripropoxytitanium, butyltributoxytitanium, tetramethoxyzirconium, tetraethoxyzirconium, tetrapropxyzirconium, tetrabutoxyzirconium, methyltrimethoxyzirconium, ethyltriethoxyzirconium, propyltripropoxyzirconium, and butyltributoxyzirconium.

The component (b), when represented by the formula (b1), is preferably a condensate of tetraethoxysilane (pentamer) or a condensate of tetramethoxysilane (pentamer). The component (b), when represented by the formula (b2), is preferably a condensate of ethyltriethoxysilane (pentamer) or a condensate of methyltrimethoxysilane (pentamer).

As described above, the metal alkoxide (monomer) and/or metal alkoxide condensate as the component (b) is added to the reaction product of the present invention. The viscosity of the metal alkoxide monomer is lower than that of the condensate. Further addition of the metal alkoxide monomer may improve the coating efficiency of the resulting coating solution. However, when the amount of the metal alkoxide monomer is increased to an amount equal to or greater than the amount of the condensate, the resulting coating solution tends to have a low viscosity, and may easily drip when applied.

(3) Component (c)

A synthetic resin (component (c)) is added to the reaction product. Specifically, the synthetic resin (component (c)) is added during or after the reaction of the amino group-containing silane compound with the boron compound. Adding the component (c) can impart crack resistance to the resulting colored film.

Non-limiting examples of the synthetic resin as the component (c) include thermosetting resin, thermoplastic resin, and UV curable resin. Specific examples include acrylic resin, epoxy resin, polyester resin, amino resin, urethane resin, furan resin, silicone resin, and modified products of these resins. Synthetic resins having various degrees of polymerization (molecular weight) can be used. Particularly preferred are epoxy resin, dipentaerythritol hexaacrylate, epoxy acrylate, silicone resin, vinyl ester resin, polyvinyl butyral, polyvinyl alcohol, and the like. The synthetic resin is preferably liquid.

The amount of the component (c) is preferably 5 to 30%, more preferably 10 to 20% by mass, relative to the total solids content. When the component (c) is less than 5% by mass, the above described effects obtainable from addition of the component (c) may be difficult to obtain. When the amount of the component (c) is more than 30% by mass, addition of a resin curing agent may be required, and the resulting film may not have high hardness.

(4) Component (d)

The component (d) is a triazine-based UV absorber having an SP value of 10 to 13.5 $(cal/cm^3)^{1/2}$. Examples include TINUVIN 400 (SP value: 11.0 $(cal/cm^3)^{1/2}$), TINUVIN 460 (SP value: 10.9 $(cal/cm^3)^{1/2}$), TINUVIN 479 (SP value: 11.3 $(cal/cm^3)^{1/2}$), and TINUVIN 477 (SP value: 11.4 $(cal/cm^3)^{1/2}$) available from BASF. The reason why good results can be obtained with a triazine-based UV absorber is not clear, but it is presumably because the absorber has high UV absorption capability and good weather resistance.

(5) Component (e)

The component (e) serves as a solvent of the colored film-forming coating solution, and consists of a non-aqueous solvent substantially having an SP value of 8 to 11.5 $(cal/cm^3)^{1/2}$. The "non-aqueous solvent substantially having an SP value of 8 to 11.5 $(cal/cm^3)^{1/2}$" means any of the following: a non-aqueous solvent of only one kind having an SP value of 8 to 11.5 $(cal/cm^3)^{1/2}$; a mixed solvent of only non-aqueous solvents each having an SP value of 8 to 11.5 $(cal/cm^3)^{1/2}$, and such a mixed solvent having an SP value of 8 to 11.5 $(cal/cm^3)^{1/2}$; and a mixed solvent of a non-aqueous solvent having an SP value of 8 to 11.5 $(cal/cm^3)^{1/2}$ and a solvent having a different SP value, and such a mixed solvent having an SP value of 8 to 11.5 $(cal/cm^3)^{1/2}$. The SP value of the mixed solvent can be calculated from the following calculation formula when, for example, two types of solvents, "solvent A" and "solvent B", are used.

$$\text{SP value of mixed solvent} = \text{SP value of solvent A} \times \frac{\text{Mole number of solvent A}}{\text{Mole number of solvent A} + \text{Mole number of solvent B}} + \text{SP value of solvent B} \times \frac{\text{Mole number of solvent B}}{\text{Mole number of solvent A} + \text{Mole number of solvent B}}$$

When the solvent contained in the coating solution has an SP value of 8 to 11.5 $(cal/cm^3)^{1/2}$, the UV absorber to be used in the present invention can be uniformly dispersed in the coating solution, and thus, the UV absorber can

be uniformly dispersed in the resulting film. When the solvent has an SP value of less than 8, the hydrophobic UV absorber may precipitate from the coating after the coating step, and the resulting film may be opaque.

When the solvent contained in the coating solution of the present invention substantially consists of a non-aqueous solvent having an SP value of 8 to 10.5 $(cal/cm^3)^{1/2}$, the resulting coating solution has better leveling properties, which advantageously shortens the time required to complete leveling of the film in a leveling step (described later).

Examples of the non-aqueous solvent having an SP value of 8 to 11.5 $(cal/cm^3)^{1/2}$ include aromatic hydrocarbons such as toluene (SP value: 9.1 $(cal/cm^3)^{1/2}$) and xylene (SP value: 9.1 $(cal/cm^3)^{1/2}$); acetic acid esters such as ethyl acetate (SP value: 8.8 $(cal/cm^3)^{1/2}$)and butyl acetate (SP value: 8.7 $(cal/cm^3)^{1/2}$) ketones such as acetone (SP value: 9.1 $(cal/cm^3)^{1/2}$) methyl ethyl ketone (SP value: 9.0 $(cal/cm^3)^{1/2}$), methyl isobutyl ketone (SP value: 8.3 $(cal/cm^3)^{1/2}$), cyclohexanone (SP value: 9.8 $(cal/cm^3)^{1/2}$), and 2-heptanone (SP value: 8.5 $(cal/cm^3)^{1/2}$); glycol ethers such as 3-methoxy-3-methylbutanol (SP value: 10.5 $(cal/cm^3)^{1/2}$), 1-methoxy-2-propanol (SP value: 11.3 $(cal/cm^3)^{1/2}$), 1-ethoxy-2-propanol (SP value: 10.9 $(cal/cm^3)^{1/2}$), 3-methoxybutyl acetate (SP value: 8.8 $(cal/cm^3)^{1/2}$), and diethylene glycol monobutyl ether (SP value: 10.5 $(cal/cm^3)^{1/2}$); ethers such as THF (SP value: 8.3 $(cal/cm^3)^{1/2}$); cellosolves such as ethylene glycol monoethyl ether (SP value: 11.5 $(cal/cm^3)^{1/2}$), ethylene glycol mono-normal butyl ether (SP value: 10.8 $(cal/cm^3)^{1/2}$), and 2-methoxybutyl acetate (SP value: 9.0 $(cal/cm^3)^{1/2}$); chlorohydrocarbons such as dichloromethane (SP value: 10.2 $(cal/cm^3)^{1/2}$); and N,N-dimethylformamide (SP value: 10.2 $(cal/cm^3)^{1/2}$). Preferred among these are ketones such as methyl ethyl ketone (SP value: 9.0 $(cal/cm^3)^{1/2}$), methyl isobutyl ketone (SP value: 8.3 $(cal/cm^3)^{1/2}$), cyclohexanone (SP value: 9.8 $(cal/cm^3)^{1/2}$), and 2-heptanone (SP value: 8.5 $(cal/cm^3)^{1/2}$), and glycol ethers such as 3-methoxy-3-methylbutanol (SP value: 10.5 $(cal/cm^3)^{1/2}$), 1-methoxy-2-propanol (SP value: 11.3 $(cal/cm^3)^{1/2}$) and 1-ethoxy-2-propanol (SP value: 10.9 $(cal/cm^3)^{1/2}$).

Examples of the solvent having an SP value outside the range of 8 to 11.5 $(cal/cm^3)^{1/2}$ which may be contained in the coating solution of the present invention include n-hexane (SP value: 7.3 $(cal/cm^3)^{1/2}$), diethyl ether (SP value: 7.3 $(cal/cm^3)^{1/2}$), 2-methoxyethanol (SP value: 12.0 $(cal/cm^3)^{1/2}$), and carbon tetrachloride (SP value: 12.2 $(cal/cm^3)^{1/2}$).

(6) Component (f), pigment

Examples of the blue pigment include Pigment Blue 15, Pigment Blue 28, and cesium tungsten oxide (CWO) microparticles. Examples of the green pigment include Pigment Green 36 and Pigment Green 56. Examples of the yellow pigment include Pigment Yellow 150 and Pigment Yellow 119. Examples of the red pigment include Pigment Red 101 and Pigment Red 254. Examples of the orange pigment include Pigment Orange 71. Examples of the black pigment include Pigment Black 26. Examples of the pink pigment include Pigment Red 202 and Pigment Violet 19. The average particle size $D_{50}$ of the pigment is preferably 10 to 300 nm. When the average particle size $D_{50}$ is less than 10 nm, particles of the pigment tend to agglomerate. When the average particle size $D_{50}$ is more than 300 nm, the visible light transmittance tends to be low. In view of the above, the average particle size $D_{50}$ of the pigment is preferably 15 to 280 nm, more preferably 20 to 250 nm.

The amount of the pigment in the colored film-forming coating solution may be 0.02 to 0.50 times the amount of the UV absorber by mass ratio. When the amount is less than 0.02 times, the coloration tends to be poor. When the amount is more than 0.50 times, the haze tends to be high. In view of the above, the amount of the pigment in the colored film-forming coating solution is preferably 0.025 to 0.45 times, more preferably 0.03 to 0.36 times the amount of the UV absorber by mass ratio.

(7) Other components

The film-forming coating solution may contain microparticles of a conductive material. The presence of the microparticles of a conductive material can impart infrared shielding properties to the colored film-attached glass sheet. Examples of the conductive material include ITO (indium tin oxide) and ATO (antimony tin oxide). The amount of the microparticles is 5 to 15% by mass relative to the total solids content. The average particle size $D_{50}$ of the microparticles is 50 to 100 nm. The film-forming coating solution may contain other components, in addition to the above components, depending on the use. Examples of such other components include antifungal agents, photocatalytic materials, rust inhibitors, anticorrosives, antialgal agents, water repellents, oil repellents, light stabilizers, antioxidants, substrate wetting agents, hydrophilic materials, and absorbent materials.

[Glass sheet]

The glass sheet to be used in the present invention is a glass sheet commonly used for automotive glass, construction glass, industrial glass, and the like. It is a glass sheet obtained by the floating process, duplex process, roll-out process, or the like. Any production process may be used. Examples of types of the glass include colorless glass; various kinds of colored glass such as green tinted glass and bronze tinted glass; functional glass such as IR cut glass

and electromagnetic shielding glass; glass that can be used as fire-protective glass such as meshed glass, low expansion glass, and zero expansion glass; strengthened glass and like other glass; and multiple-pane glass such as laminated glass.

In particular, in the present invention, the glass sheet preferably has an absorbance per mm thickness of 0.10 or less at the maximum in a wavelength range of 380-780 nm. A glass sheet having such physical properties is a colorless glass sheet, so-called "high-transmission glass". When the glass sheet is high-transmission glass, the colored film-attached glass sheet renders a color that is exactly the same as the color of the colored film. Thus, the colored film-attached glass sheet has better appearance. When the glass sheet is high-transmission glass, the glass sheet has low UV shielding properties so that the colored film is easily affected by ultraviolet light. The colored film-attached glass sheet obtainable by the production method of the present invention has a structure that can prevent or reduce pigment discoloration. Thus, the colored film-attached glass sheet is particularly highly advantageous when the glass sheet is high-transmission glass.

The absorbance can be calculated from the following formula according to the Lambert-Beer law.

$$\text{Absorbance of glass substrate} = \text{Log}_{10}(I_0/I) = a \times 1$$

$I_0$ = Intensity of incident light
I = Intensity of transmitted light
a = Absorbance per mm thickness
1 = Length of light path

Preferably, the glass sheet is cleanly washed and dried before the colored film is formed thereon. The washing can be performed by a known washing method such as washing with an abrasive cleanser such as cerium oxide, washing with a brush, shower washing, or high-pressure shower washing. The drying can be performed by a known drying method such as natural drying or drying using air shower. Dry washing using atmospheric pressure plasma or UV ozone may also be used.

The coating step of the present invention may be performed on a surface of the washed and dried glass sheet. Alternatively, a primer layer may be formed on a surface of the washed and dried glass sheet, and the coating step of the present invention may be performed on the surface of the glass sheet (surface of the primer layer). The primer layer can be formed by coating a surface of the washed and dried glass sheet with a primer solution containing a silane coupling agent, followed by drying. Examples of the silane coupling agent include 3-aminopropyltrimethoxysilane (e.g., product name "KBM-903" available from Shin-Etsu Chemical Co., Ltd.), 3-aminopropyltriethoxysilane (e.g., product name "KBE-903" available from Shin-Etsu Chemical Co., Ltd.), 3-glycidoxypropyltrimethoxysilane (e.g., product name "KBM-403" available from Shin-Etsu Chemical Co., Ltd.), 3-glycidoxypropyltriethoxysilane (e.g., product name "KBE-403" available from Shin-Etsu Chemical Co., Ltd.), 2-(3,4-epoxycyclohexyl)ethyltrimethoxysilane (e.g., product name "KBM-303" available from Shin-Etsu Chemical Co., Ltd.), 3-glycidoxypropylmethyldimethoxysilane (e.g., product name "KBM-402" available from Shin-Etsu Chemical Co., Ltd.), 3-glycidoxypropylmethyldiethoxysilane (e.g., product name "KBE-402" available from Shin-Etsu Chemical Co., Ltd.), vinyltrimethoxysilane (e.g., product name "KBM-1003" available from Shin-Etsu Chemical Co., Ltd.), and vinyltriethoxysilane (e.g., product name "KBE-1003" available from Shin-Etsu Chemical Co., Ltd.).

[Coating step]

Coating step in which coating is formed by coating a surface of the glass sheet with the film-forming coating solution

A surface of the glass sheet can be coated with the coating solution by a known coating method such as spin coating, dip coating, nozzle coating, curtain coating, roll coating, spray coating, blade coating, or brush coating. Preferred among these coating methods are spray coating and nozzle coating.

After the coating step, a leveling step may be performed before a pre-heating step or a curing step (described later). The resulting film can have excellent smoothness owing to the leveling step. The leveling step is performed with the substrate placed substantially horizontally. The leveling step may also combine transfer of the substrate, and leveling may be facilitated by fine vibration during transfer of the substrate in a substantially horizontal direction. Leveling may also be facilitated by imparting ultrasonic vibration to the substrate. The leveling step is preferably performed at room temperature for 5 to 20 minutes.

The coating (or film forming) may be performed on the entire surface of the substrate or a part of the surface. For example, when the glass sheet is to be mounted to contact with another member, a region corresponding to the

contact portion (or a region including the contact portion and its margin) of the surface of the substrate may not be coated (i.e., a film may not be formed) and the rest of the surface may be coated (i.e., a film may be formed). Examples of embodiments in which the substrate is mounted to contact with another member include an embodiment in which a glass sheet for vehicles including automobiles, a construction glass sheet, or an industrial glass sheet is mounted as a fixed window, and an embodiment in which the glass sheet is mounted by being fitted into a frame such as a sash frame. When a non-film-forming region is provided as described above, it is possible to achieve good bonding and adhesion between the non-film-forming region and a material such as a sealing material, molding material, or glazing channel material for fixing the glass sheet.

Also, for example, when the coating is performed on a glass sheet for a movable window, a region that comes into contact with another member during opening and closing of the window (or a region including the contact portion and its margin) of the surface of the glass sheet may not be coated (i.e., a film may not be formed) and the rest of the surface may be coated (i.e., a film may be formed). Examples of the movable window include a window such as a glass sheet for vehicles including automobiles, a construction glass sheet, or an industrial glass sheet which is moved when the window is opened and closed. The region that comes into contact with another member during opening and closing of the window is, for example, a region around the periphery of the glass sheet that is housed in a frame when the window is closed (i.e., a region that comes into contact with the frame). When a non-film-forming region is provided as described above, it may be possible to prevent the region around the periphery of the glass sheet from being scratched when the glass sheet is opened and closed. In another example, the coating may not be formed on a region that comes into contact with an operating mechanism such as an opening-closing mechanism (or a region including the contact portion and its margin) of the surface of the glass sheet.

In the above case, the coating may be first performed on the entire surface of the substrate (glass sheet), and then the coating solution on a non-film-forming region may be removed by wiping off, by immersing the non-film-forming region in a solvent, or by pouring a solvent over the non-film-forming region; or the coating may be performed on a non-film-forming region that has been covered with masking which is removed after coating.

Alternatively, a water repellent film or a water repellent/oil repellent film which repels (which is not compatible with) the coating solution of the present invention may be formed on the non-film-forming region before coating, and then the coating solution repelled from the water repellent film or the water repellent/oil repellent film may be wiped off. Further, the water repellent film or the water repellent/oil repellent film may also be removed.

Still alternatively, a water repellent film or a water repellent/oil repellent film which repels (which is not compatible with) the coating solution of the present invention may be formed on the non-film-forming region before coating and curing, and a cured film formed in a repelled state on the coating solution repelled from the water repellent film or the water repellent/oil repellent film may be removed. Further, the water repellent film or the water repellent/oil repellent film may also be removed.

Still yet alternatively, the coating may be first performed on the entire surface of a substrate (glass sheet), followed by curing to form a film on the entire surface of the substrate (glass sheet), and then a desired region of the film may be physically or chemically removed.

[Curing step]

Preferably, a colored film is formed on the surface of the glass sheet by exposing the glass sheet after the coating step to heat at 100°C to 350°C and steam to promote the curing reaction of the coating. Preferably, the curing step is performed in a chamber to easily stabilize the temperature of the glass sheet and the amount of steam to which the surface of the glass sheet is exposed. Preferably, the glass sheet is exposed to superheated steam at a temperature higher than 100°C to 350°C, so that a dehydration condensation reaction proceeds in a short time and a film having high hardness can be obtained. A more preferred temperature of the superheated steam is higher than 100°C to 300°C. The superheated steam is a steam at a temperature higher than 100°C which can be obtained by heating saturated steam having a temperature of 100°C.

After the coating step or the leveling step, preferably, the glass sheet is heated at 100°C to 350°C, and the curing step is performed with the temperature of the glass sheet maintained in the range. Preferably, the temperature of the glass sheet is set in the above range before the curing step (which is sometimes described as "pre-heating step"), so that dew condensation is less likely to occur on the surface of the glass sheet at the start of the curing step, and a more uniform film can thus be formed. The heating temperature range is more preferably 100°C to 300°C.

The colored film obtained through the curing step preferably has a thickness of 1.5 μm to 8 μm. When the thickness of the colored film is less than 1.5 μm, the film has poor coloration, so that the amount of pigment needs to be increased to maintain coloration, with the result that the film tends to have poor durability. The film tends to have poor durability also when the thickness is more than 8 μm. In view of the above, the thickness of the colored film may be 2 μm to 7 μm, preferably 2.5 μm to 6 μm.

EXAMPLES

The following describes methods of evaluating the colored film-attached glass sheets obtained in examples and comparative examples of the present invention. The present invention is not limited to these examples.

[Presence or absence of Si-O-B bond in film]

A portion of the film of the resulting colored film-attached glass sheet was scraped off, and the solid-state $^{11}B$-NMR and the solid-state $^{29}Si$-NMR of the piece were measured to determine the presence or absence of an Si-O-B bond in the film.

[Film thickness]

The thickness of the film of the colored film-attached glass sheet was measured using Surf-corder ET-4000A available from Kosaka Laboratory Ltd.

[Appearance]

Cracking, coloring, and white cloudiness (non-uniform dispersion of the UV absorber in the film due to agglomeration or the like) of the film of the colored film-attached glass sheet were visually observed for appearance defects.

[Haze value]

The haze value of the colored film-attached glass sheet was measured using a haze meter NDH 2000 available from Nippon Denshoku Industries Co., Ltd. When the haze value of the resulting colored film-attached glass sheet is less than 3.0%, the colored film-attached glass sheet has good transparency in practical use. A lower haze is considered to indicate higher transparency.

[UV transmittance]

The UV transmittance TUV of the colored film-attached glass sheet was calculated in accordance with ISO 9050-1990 using a spectrophotometer U-4100 available from Hitachi, Ltd. The colored film-attached glass sheet having a TUV of less than 1% was regarded as acceptable.

[Color difference]

The L*a*b* values of the colored film-attached glass sheet was determined in accordance with ISO 11664-4. The colored film-attached glass sheet was regarded as acceptable when its color difference $\Delta E$ was less than 5 before and after each of a moisture resistance test, a heat resistance test, and a weather resistance test described below.

[Moisture resistance test]

In accordance with JIS R 3212, the colored film-attached glass sheet was stored in an environment at 50°C with 95% RH for 500 hours, and the appearance and the color difference after the test were observed. When no appearance defects were found after the test and the color difference before and after the test was $\pm 5$ or less, the colored film-attached glass sheet has good moisture resistance in practical use. A smaller color difference is considered to indicate higher moisture resistance.

[Heat resistance test]

The colored film-attached glass sheet was stored in an environment at 80°C for 500 hours, and the appearance and the color difference after the test were observed. When no appearance defects are found after the test and the color difference before and after the test is $\pm 5$ or less, the colored film-attached glass sheet has good heat resistance in practical use. A smaller color difference is considered to indicate higher heat resistance.

[Weather resistance test]

In accordance with JIS R 3212, a glass surface (uncoated side) of the colored film-attached glass was irradiated

with light for 1000 hours at a black panel temperature of 83°C using a sunshine weather meter SX80 available from Suga Test Instruments Co., Ltd., and the appearance and the color difference after the test were observed. When no appearance defects are found after the test and the color difference before and after the test is ±5 or less, the colored film-attached glass sheet has good weather resistance in practical use. A smaller color difference is considered to indicate higher weather resistance.

[Wear resistance test]

In accordance with JIS R 3212, the colored film-attached glass sheet was placed on a rotating table with the coated side facing up, and an abrasive wheel (C180 0XF available from Daiwa Kasei Industry Co., Ltd.) with a load of 4.9 N was rotated 1000 times against the coated side. The haze value difference of the portion for the test before and after the test was calculated. When the haze value difference is less than ±5%, the colored film-attached glass sheet has good wear resistance in practical use. A smaller color difference is considered to indicate higher wear resistance.

[Example 1]

Step of obtaining a colored film-forming coating solution

In a reaction vessel, 2.73 g of boric acid ($H_3BO_3$) powder as the component (b) was added to 16.30 g of a 3-aminopropyltriethoxysilane solution as the component (a) (the component (b) was added in an amount of 0.6 mol per mol of the component (a)), followed by stirring at 23°C for 5 minutes. Subsequently, 29.15 g of tetramethoxysilane as the component (c) was added (the amount of the component (c) was 2.6 mol per mol of the component (a)), and 5.35 g of epoxy resin CY232 (Nagase ChemteX Corporation) as the component (d) was added (the amount of the component (d) was 18% by mass relative to the total solids content). Subsequently, the mixture was reacted at 60°C for 120 hours. Thus, a viscous liquid was formed.

To this liquid was added 33.27 g of 2-heptanone (SP value: 8.5 $(cal/cm^3)^{1/2}$)as a solvent, 8.79 g of 3-methoxy-3-methylbutanol (SP value: 10.5 $(cal/cm^3)^{1/2}$)as a glycol ether, 2.61 g of triazine-based UV absorber TINUVIN 460 (SP value: 10.9 $(cal/cm^3)^{1/2}$) (BASF) as a UV absorber, 0.52 g of a light stabilizer TINUVIN 292, and 1 g of a pigment dispersant (solid content concentration: 10%; phthalocyanine blue "Pigment Blue 15:4" as a blue pigment; $D_{50}$: 114 nm). Thus, a film-forming coating solution having a solid content concentration of 29% by mass was obtained.

The solvent in the coating solution has an SP value of 9.0 $(cal/cm^3)^{1/2}$. The produced coating solution was colorless, and no white cloudiness due to agglomeration or the like was observed. The UV absorber (TINUVIN 460) and the phthalocyanine blue "Pigment Blue 15:4" were uniformly dispersed in the coating solution. All the coating solutions produced in this example and other examples were colorless, and no white cloudiness due to agglomeration or the like was observed. The UV absorber and the phthalocyanine blue were uniformly dispersed in these coating solutions. In this example, the colored film-forming coating solution contained the UV absorber in an amount of 7.7% by mass relative to the total solids content and the pigment in an amount equal to 0.03 times the amount of the UV absorber by mass ratio.

Coating step

An amount of 5 g of the coating solution was spin-coated to a float glass sheet (length: 10 cm; width: 10 cm; thickness: 3 mm; visible light transmittance in accordance with ISO 9050: 90.5%; solar transmittance in accordance with JIS R 3106: 86.0%; UV transmittance in accordance with ISO 9050: 59.6%; absorbance per mm thickness in a wavelength range of 380-780 nm: 0.013 or less; high-transmission glass sheet). The thickness of each film used in the examples and the comparative examples was adjusted by the rotation speed of the spin coating.

Leveling step

The glass sheet coated with the coating solution was placed horizontally at room temperature for 10 minutes.

Pre-heating step

After the leveling step, the glass sheet coated with the coating solution was heated in a hot air circulation furnace at 180°C for 5 minutes.

Curing step

After the pre-heating, the glass sheet coated with the coating solution was exposed to superheated steam at

180°C for 10 minutes using a superheated steam generator available from Shinnetsu Co., Ltd. Thus, a colored film-attached glass sheet was obtained. The colored film had a thickness of 4.4 μm. Table 1 shows the evaluation results of the colored film-attached glass sheet.

[Table 1]

| | Evaluation of the resulting colored film-attached glass sheet | | | | | | | Durability test of the colored film-attached glass sheet | | | | | | |
|---|---|---|---|---|---|---|---|---|---|---|---|---|---|---|
| | | | | | | | | Moisture resistance | | Heat resistance | | Weather resistance | | Wear resistance Difference in haze value [%] |
| | Film thickness [μm] | Appearance | Haze value [%] | TUV [%] | L* | a* | b* | Appearance | ΔE | Appearance | ΔE | Appearance | ΔE | |
| Example 1 | 4.4 | No defects | 0.3 | 0.5 | 90.4 | -5.32 | -5.59 | No defects | 0.6 | No defects | 0.6 | No defects | 1.6 | 4.3 |
| Example 2 | 4.3 | No defects | 0.3 | 0.5 | 90.6 | -5.8 | -6.05 | No defects | 0.5 | No defects | 0.8 | No defects | 1.8 | 4.2 |
| Example 3 | 4.5 | No defects | 0.3 | 0.4 | 90.6 | -8.84 | -3.92 | No defects | 0.5 | No defects | 0.5 | No defects | 1.7 | 4.1 |
| Example 4 | 4.3 | No defects | 0.4 | 0.4 | 94.9 | -12.9 | 26.3 | No defects | 0.6 | No defects | 1.0 | No defects | 1.4 | 4,0 |
| Example 5 | 4.5 | No defects | 0.5 | 0.4 | 89.3 | 10.5 | -4.4 | No defects | 0.3 | No defects | 1.0 | No defects | 2.4 | 3.9 |
| Example 6 | 4.8 | No defects | 0.2 | 0.4 | 86.6 | -2.3 | 1.44 | No defects | 0.3 | No defects | 1.0 | No defects | 0.8 | 4.0 |
| Example 7 | 4.7 | No defects | 0.3 | 0.4 | 90.8 | -23.8 | 5.06 | No defects | 0.6 | No defects | 0.5 | No defects | 1.6 | 4.1 |
| Comparative Example 1 | 4.5 | No defects | 0.5 | 0.1 | 89.1 | 6.62 | 5.47 | - | - | - | - | No defects | 9.1 | 4.0 |
| Comparative Example 2 | 4.5 | No defects | 0.5 | 0.6 | 89.8 | 12.4 | -5.93 | - | - | - | - | No defects | 5.5 | 4.2 |

[Example 2]

A colored film-attached glass sheet was obtained by the same method as in Example 1, except that the component (c) was tetraethoxysilane, and the colored film-forming coating solution contained the UV absorber in an amount of 7.7% by mass relative to the total solids content and the pigment in an amount equal to 0.03 times the amount of the UV absorber by mass ratio. The colored film obtained in this example had a thickness of 4.3 μm. Table 1 shows the evaluation results of the colored film-attached glass sheet.

[Example 3]

A colored film-attached glass sheet was obtained by the same method as in Example 1, except that the UV absorber was a triazine-based UV absorber "TINUVIN 477" (SP value: 11.4 $(cal/cm^3)^{1/2}$) available from BASF, and the colored film-forming coating solution contained the UV absorber in an amount of 7.7% by mass relative to the total solids content and the pigment in an amount equal to 0.03 times the amount of the UV absorber by mass ratio. The colored film obtained in this example had a thickness of 4.5 μm. Table 1 shows the evaluation results of the colored film-attached glass sheet.

[Example 4]

A colored film-attached glass sheet was obtained by the same method as in Example 1, except that a yellow pigment "Pigment Yellow 150" ($D_{50}$: 125 nm) was used, and the colored film-forming coating solution contained the UV absorber in an amount of 7.8% by mass relative to the total solids content and the pigment in an amount equal to 0.17 times the amount of the UV absorber by mass ratio. The colored film obtained in this example had a thickness of 4.3 μm. Table 1 shows the evaluation results of the colored film-attached glass sheet.

[Example 5]

A colored film-attached glass sheet was obtained by the same method as in Example 1, except that a red pigment "Pigment Red 202" ($D_{50}$: 120 nm) was used, and the colored film-forming coating solution contained the UV absorber in an amount of 7.6% by mass relative to the total solids content and the pigment in an amount equal to 0.08 times the amount of the UV absorber by mass ratio. The colored film obtained in this example had a thickness of 4.5 μm. Table 1 shows the evaluation results of the colored film-attached glass sheet.

[Example 6]

A colored film-attached glass sheet was obtained by the same method as in Example 1, except that a black pigment "Pigment Black 26" ($D_{50}$: 65 nm) was used, and the colored film-forming coating solution contained the UV absorber in an amount of 7.6% by mass relative to the total solids content and the pigment in an amount equal to 0.13 times the amount of the UV absorber by mass ratio. The colored film obtained in this example had a thickness of 4.8 μm. Table 1 shows the evaluation results of the colored film-attached glass sheet.

[Example 7]

A colored film-attached glass sheet was obtained by the same method as in Example 1, except that a green pigment "Pigment Green 36" ($D_{50}$: 135 nm) was used, and the colored film-forming coating solution contained the UV absorber in an amount of 7.7% by mass relative to the total solids content and the pigment in an amount equal to 0.33 times the amount of the UV absorber by mass ratio. The colored film obtained in this example had a thickness of 4.7 μm. Table 1 shows the evaluation results of the colored film-attached glass sheet.

[Comparative Example 1]

A colored film-attached glass sheet was obtained by the same method as in Example 1, except that the UV absorber was a benzophenone-based UV absorber "SEESORB 106" (SP value: 13.0 $(cal/cm^3)^{1/2}$) available from Shipro Kasei Kaisha, Ltd., a red pigment "Pigment Red 202" ($D_{50}$: 120 nm) was used, and the colored film-forming coating solution contained the UV absorber in an amount of 8.2% by mass relative to the total solids content and the pigment in an amount equal to 0.07 times the amount of the UV absorber by mass ratio. The colored film obtained in this comparative example had a thickness of 4.5 μm. The colored film-attached glass sheet showed a significant change, $\Delta E$ = 9.1, in the weather resistance test.

[Comparative Example 2]

A colored film-attached glass sheet was obtained by the same method as in Example 1, except that the UV absorber was a benzotriazole-based UV absorber "TINUVIN 109" (SP value: 11.1 $(cal/cm^3)^{1/2}$) available from BASF, a red pigment "Pigment Red 202" ($D_{50}$: 120 nm) was used, and the colored film-forming coating solution contained the UV absorber in an amount of 9.3% by mass relative to the total solids content and the pigment in an amount equal to 0.06 times the amount of the UV absorber by mass ratio. The colored film obtained in this comparative example had a thickness of 4.5 μm. The colored film-attached glass sheet showed a significant change, ΔE = 5.5, in the weather resistance test.

[Comparative Example 3]

A colored film-attached glass sheet was obtained by the same method as in Example 1, except that a red pigment "Pigment Red 202" ($D_{50}$: 120 nm) was used, and the colored film-forming coating solution contained the UV absorber in an amount of 7.6% by mass relative to the total solids content and the pigment in an amount equal to 0.08 times the amount of the UV absorber by mass ratio. The colored film obtained in this comparative example had a thickness of 11 μm. This colored film-attached glass sheet showed good coloration, but the film cracked in the weather resistance test.

[Comparative Example 4]

A colored film-attached glass sheet was obtained by the same method as in Example 1, except that a yellow pigment "Pigment Yellow 150" ($D_{50}$: 125 nm) was used, and the colored film-forming coating solution contained the UV absorber in an amount of 7.4% by mass relative to the total solids content and the pigment in an amount equal to 0.55 times the amount of the UV absorber by mass ratio. The colored film obtained in this comparative example had a thickness of 1.3 μm. The colored film-attached glass sheet showed a haze value difference of 5.5% before and after the wear resistance test, and the film had low wear resistance.

[Comparative Example 5]

A colored film-attached glass sheet was obtained by the same manner as in Example 1, except that a yellow pigment "Pigment Yellow 150" ($D_{50}$: 125 nm) was used. In this comparative example, the colored film-forming coating solution contained the UV absorber in an amount of 12.6% by mass relative to the total solids content and the pigment in an amount equal to 0.10 times the amount of the UV absorber by mass ratio. The colored film had a thickness of 5.6 μm. In the resulting colored film-attached glass sheet, a solid was precipitated on the surface of the film in the moisture resistance test.

[Comparative Example 6]

A colored film-attached glass sheet was obtained by the same method as in Example 1, except that the colored film-forming coating solution contained the UV absorber in an amount of 7.7% by mass relative to the total solids content and the same pigment as used in Example 1 in an amount equal to 0.01 times the amount of the UV absorber by mass ratio. The colored film obtained in this comparative example had a thickness of 5.2 μm. The colored film-attached glass sheet had poor coloration.

[Comparative Example 7]

A colored film-attached glass sheet was obtained by the same method as in Example 1, except that a red pigment "pigment Red 202 ($D_{50}$: 120 nm) was used, and the colored film-forming coating solution contained the UV absorber in an amount of 7.6% by mass relative to the total solids content and the pigment in an amount equal to 0.57 times the amount of the UV absorber by mass ratio. The colored film obtained in this comparative example had a thickness of 5.3 μm. The colored film-attached glass sheet had low transparency with an initial haze of 3.5%. The colored film-attached glass sheet showed a color difference ΔE of 6.8 before and after the weather resistance test. Thus, discoloration of the film was significant.

## Claims

1. A method of producing a colored film-attached glass sheet including a glass sheet and a colored film formed on at least one surface of the glass sheet, the method comprising:

   a step of obtaining a colored film-forming coating solution by mixing the following components:

   (a) a reaction product obtained by reacting an amino group-containing silane compound represented by $R^1_{4-n}Si(OR^2)_n$ [1] wherein $R^1$ represents an organic group containing an amino group, $R^2$ represents a methyl, ethyl, or propyl group, and n represents an integer selected from 1 to 3, with at least one boron compound selected from the group consisting of $H_3BO_3$ and $B_2O_3$;
   (b) a metal alkoxide and/or a metal alkoxide condensate;
   (c) a synthetic resin;
   (d) a triazine-based UV absorber having an SP value of 10 to 13.5 $(cal/cm^3)^{1/2}$;
   (e) a solvent substantially consisting of a non-aqueous solvent having an SP value of 8 to 11.5 $(cal/cm^3)^{1/2}$; and
   (f) a pigment;

   a coating step of coating a surface of the glass sheet with the colored film-forming coating solution to form a coating thereon; and
   a curing step of heating the glass sheet after the coating step to cure the coating to form the film,
   wherein the colored film-forming coating solution contains the UV absorber in an amount of 5 to 12% by mass relative to the total solids content and the pigment in an amount equal to 0.02 to 0.50 times the amount of the UV absorber by mass ratio, and the colored film has a thickness of 1.5 to 8 μm.

2. The method of producing a colored film-attached glass sheet according to claim 1,
   wherein the reaction product is obtained by reacting the boron compound with the amino group-containing silane compound at a ratio of 0.02 to 0.8 mol of the boron compound to 1 mol of the amino group-containing silane compound.

3. The method of producing a colored film-attached glass sheet according to claim 1 or 2,
   wherein the reaction product is a reaction product obtained by reacting the amino group-containing silane compound with the boron compound, without hydrolysis by adding water.

4. The method of producing a colored film-attached glass sheet according to any one of claims 1 to 3,
   wherein the metal alkoxide is tetramethoxysilane and/or tetraethoxysilane, and is added in an amount of 10 or less mol relative to 1 mol of the amino group-containing silane compound.

5. The method of producing a colored film-attached glass sheet according to any one of claims 1 to 4,
   wherein the film-forming coating solution includes microparticles of a conductive material.

6. The method of producing a colored film-attached glass sheet according to any one of claims 1 to 5,
   wherein the glass sheet has an absorbance per mm thickness of 0.10 or less at the maximum in a wavelength range of 380-780 nm.

## INTERNATIONAL SEARCH REPORT

International application No.
PCT/JP2018/002078

A. CLASSIFICATION OF SUBJECT MATTER
Int.Cl. C03C17/30(2006.01)i, B32B17/10(2006.01)i, C09D7/40(2018.01)i, C09D183/08(2006.01)i, C09D201/00(2006.01)i
According to International Patent Classification (IPC) or to both national classification and IPC

B. FIELDS SEARCHED
Minimum documentation searched (classification system followed by classification symbols)
Int.Cl. C03C17/30, B32B17/10, C09D1/00-10/00, C09D101/00-201/10

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2015-34281 A (CENTRAL GLASS CO., LTD.) 19 February 2015, claims 4-22, paragraphs [0095]-[0096], [0102], [0125]-[0128] (Family: none) | 1-6 |
| A | WO 2006/129695 A1 (NITTO BOSEKI CO., LTD.) 07 December 2006, claims, paragraphs [0012], [0036] & EP 1887025 A1, claims, paragraphs [0012], [0036] & US 2009/0082501 A1 & CN 101189283 A & KR 10-2008-0012912 A | 1-6 |
| A | JP 2002-161242 A (ISHIHARA CHEM CO., LTD.) 04 June 2002, claims, paragraphs [0001]-[0003], [0006], [0011] (Family: none) | 1-6 |
| A | JP 5-125084 A (CIBA-GEIGY AG) 21 May 1993, claims, paragraphs [0001], [0027]-[0034] & EP 507727 A2, claims, page 2, lines 1-2, page 5, line 50 to page 6, line 39 & US 5266715 A & KR 10-0199343 B | 1-6 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 07 March 2018 (07.03.2018) | 20 March 2018 (20.03.2018) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015034281 A


### Non-patent literature cited in the description


- High performance UV cut tempered automotive glass. *NEW GLASS,* 2012, vol. 27 (104), 70-74